## Europäisches Patentamt
## European Patent Office
## Office européen des brevets

(11) Numéro de publication: **0 307 382**
**A1**

(12) **DEMANDE DE BREVET EUROPEEN**

(21) Numéro de dépôt: **88870119.0**

(22) Date de dépôt: **11.07.88**

(51) Int. Cl.⁴: **C 01 B 31/18**

(30) Priorité: **22.07.87 BE 8700812**

(43) Date de publication de la demande:
**15.03.89 Bulletin 89/11**

(84) Etats contractants désignés:
**AT BE CH DE ES FR GB GR IT LI LU NL SE**

(71) Demandeur: **Godrie, Paul**
**43 rue Sturbaut**
**B-9600 Renaix (BE)**

(72) Inventeur: **Godrie, Paul**
**43 rue Sturbaut**
**B-9600 Renaix (BE)**

(74) Mandataire: **Bosch, Henry et al**
**Freylinger & Associés 22/43 Avenue J.S. Bach**
**B-1080 Bruxelles (BE)**

Le titre de l'invention a été modifié (Directives relatives à l'examen pratiqué à l'OEB, A-III, 7.3)

(54) **Procédé continu de production de monoxyde de carbone.**

(57) L'invention est relative à un procédé continu de production de CO à grande échelle dans lequel on injecte en continu, dans un four rotatif du type d'un four de cimenterie ou analogue, de manière à atteindre un nombre de Reynolds compris entre 20.000 et 200.000, du $CO_2$, une matière carbonée broyée ainsi que de l'oxygène.

Figure unique.

**POOR QUALITY**

Bundesdruckerei Berlin

**Description**

## PROCEDE CONTINU DE PRODUCTION DE CO

### Objet de l'invention

La présente invention est relative à un procédé continu de production de CO à grande échelle, notamment de CO très pur.

### Arrière-plan technologique de l'invention

Il est connu de fabriquer du CO à partir de méthane et d'eau selon la réaction

$$CH_4 + H_2O \rightleftharpoons CO + 3H_2$$

Selon cette réaction, l'hydrogène obtenu est relativement important et le rapport hydrogène/monoxyde de carbone est déséquilibré, notamment pour les applications recherchées.

Dans le brevet belge n° 902.904 est décrit la fabrication de réactifs tels que l'hydrogène, le monoxyde de carbone et l'anhydride carbonique, pour l'industrie chimique au départ de la gazéification de produits carbonés, par du $CO_2$.

On y décrit notamment la mise en application de la réaction de Boudouard

$$CO_2 + C \rightleftharpoons 2CO + 38,6 \text{ kcal/mole}$$

dans des éléments de four rotatif. Par élément de four rotatif, on entend le préchauffeur ou une partie de virole de four utilisée comme gazogène classique dans lequel on met en oeuvre la réaction de Boudard, soit en lit fixe soit en lit fluidisé. Toutefois, les débits de matière et de produit obtenu ne sont pas suffisants et, dans le cas du lit fixe, le procédé est, de plus, discontinu. Les installations sont assez onéreuses et la répartition de ces frais sur le produit final en augmente le coût de manière sensible.

### Buts de l'invention

Le but de la présente invention consiste à fournir un procédé de production en continu de grandes quantités de monoxyde de carbone en faisant appel à la réaction de Boudouard.

Un but supplémentaire consiste à produire le monoxyde de carbone à échelle industrielle, à un prix de revient particulièrement peu élevé.

### Eléments essentiels de l'invention

Selon la présente invention, on injecte en continu, dans un four rotatif du type d'un four de cimenterie ou analogue, de manière à atteindre un nombre de Reynolds compris entre 20.000 et 200.000, du $CO_2$, une matière carbonée broyée ainsi que de l'oxygène.

L'alimentation des produits de départ est de l'ordre de plusieurs dizaines de tonnes par heure et permet d'atteindre un nombre de Reynolds particulièrement élevé. On assure ainsi des débits très élevés et des temps de contact suffisant pour le déroulement des diverses réactions de réduction et d'oxydation. Par ailleurs, on dispose ainsi d'une installation aisée à contrôler et à conduire, notamment pour des débits de cette importance. Les frais d'installation sont relativement réduits et le coût de fabrication du CO en est réduit, notamment au vu des débits de CO de l'ordre de 80 T/h.

Selon une forme d'exécution préférée, le $CO_2$ est préchauffé à une température de l'ordre de 800 à 1000°C.

L'oxygène introduit en vue de brûler la matière carbonée broyée destinée à apporter l'énergie nécessaire à la réalisation de la réaction susmentionnée est avantageusement préchauffée à une température comprise entre 500° et 1000°C en amont du four.

Il est bien évident que cet apport de matière carbonée participe également, en plus de la fourniture des thermies nécessaires à la mise en oeuvre de la réaction de Boudouard, à la quantité de monoxyde de carbone produit à la sortie de l'installation.

Avantageusement, le $CO_2$ utilisé est récupéré des fumées industrielles, telles que les fumées de l'industrie pétrolière, des centrales thermiques ou, de préférence, des fours à chaux ou de cimenterie, selon un procédé classique.

La matière carbonée peut consister en du charbon pulvérisé ou du char broyé provenant de la carbonisation à basse température (inférieure à 950 °C), le diamètre des particules étant avantageusement inférieur à 100 microns.

Selon une forme d'exécution préférée de la présente invention, la matière carbonée est alimentée par une tuyère, moyennant du $CO_2$, en tête de four.

Les rapports pondéraux des diverses matières alimentées sont choisis en fonction de la production rechercée et dans le but de permettre la consommation maximale de carbone minéral injecté. Avantageusement, le rapport pondéral matière carbonée/$CO_2$ est compris entre 0,5 et 1,1, et le rapport pondéral oxygène/$CO_2$ est compris entre 0,35 et 0,85.

Le gaz produit traverse avantageusement un ou plusieurs échangeurs de chaleur pour en ramener la température à environ 60 °C et est éventuellement dépoussiéré de manière connue en soi. Il est bien évident que les calories récupérées lors du refroidissement du gaz produit puissent être utilisées pour préchauffer les matières à introduire.

On peut également avantageusement prévoir l'introduction de calcaire en suspension dans du $CO_2$, en vue d'éliminer le soufre éventuellement contenu dans le charbon.

Comme déjà décrit dans l'état de la technique, le CO ainsi produit peut servir à la fabrication d'hydrocarbures, d'alcools, etc., indépendamment de l'existence de gaz naturel ou de pétrole, à des prix très peu élevés, notamment au vu de l'utilisation de matière de départ qui sont récupérées d'autres procédés.

Alors que le prix matière pour produire un kilo de CO est d'environ 1,79 FB lorsqu'il est obtenu à la manière d'un gazogène classique, un kilo de CO obtenu conformément à l'invention revient à environ 1,02 FB.

De même, dans la production d'éthanol, on gagne jusqu'à environ 1,09 FB par kilo et, dans la production d'hexane, environ 1,45 FB par kilo.

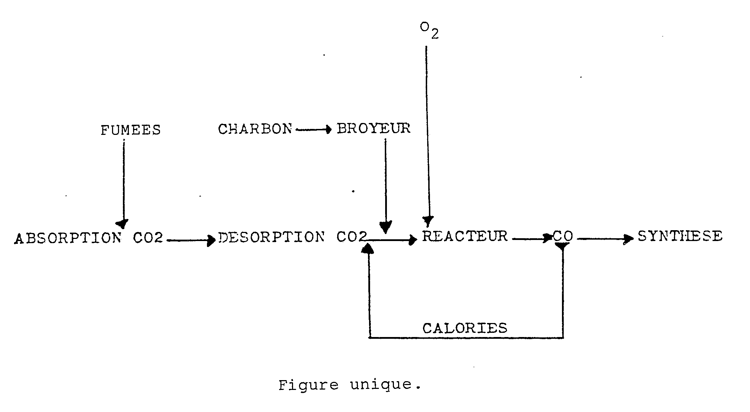

## Brève description de la figure

L'invention est décrite plus en détail à l'appui de l'exemple qui suit illustré par la figure unique représentant un schéma de fonctionnement.

## Exemple

Dans un four rotatif de cimenterie d'une longueur de 60 m et d'un diamètre de 4 m, on introduit par heure, en continu, avec un nombre de Reynolds particulièrement élevé (de 20.000 à 200.000) 38.750 kg de $CO_2$, 30.600 kg de charbon et 18.560 kg d'oxygène.

Le four rotatif tourne à une vitesse suffisante qui empêche des déformations locales de la virole par suite de l'action de la chaleur et contient avantageusement un lit fixe. Ledit four incliné de manière classique est bien entendu rendu étanche grâce à l'utilisation de bagues d'étanchéité et/ou est mis sous une légère dépression.

On peut également encore y injecter une quantité adéquate de calcaire, par exemple sous forme de chaux, pour capter le soufre introduit par le charbon. Dans ce cas, il y a bien entendu lieu de prévoir un moyen de récupération du calcaire à la sortie du four.

On retire, à la sortie du four, 81.790 kg de CO/heure. Le $CO_2$ injecté provient avantageusement de fumées industrielles et est, après absorption et désorption préchauffé dans un ou plusieurs échangeurs dont la partie chaude est alimentée par l'énergie thermique provenant du refroidissement du CO obtenu.

Le charbon est broyé de manière à présenter une granulométrie inférieure à 100 microns avant d'être injecté dans le four rotatif.

Le CO est obtenu l'état pratiquement pur et peut être utilisé pour la synthèse d'hydrocarbures d'alcools d'acides organiques...etc.

## Revendications

1. Procédé continu de production de CO à grande échelle caractérisé en ce qu'on injecte en continu, dans un four rotatif du type d'un four de cimenterie ou analogue, de manière à atteindre un nombre de Reynolds compris entre 20.000 et 200.000, du $CO_2$, une matière carbonée broyée ainsi que de l'oxygène.

2. Procédé selon la revendication 1 caractérisé en ce que le $CO_2$ à injecter est préchauffé à une température de l'ordre de 800° à 1000°C, en amont du four rotatif.

3. Procédé selon la revendication 1 ou 2 caractérisé en ce que l'oxygène à injecter est préchauffé entre 500° et 1000°C en amont du four rotatif.

4. Procédé selon l'une quelconque des revendications précédentes caractérisé en ce que le $CO_2$ utilisé est récupéré de fumées industrielles.

5. Procédé selon l'une quelconque des revendications précédentes caractérisé en ce que la matière carbonée consiste en du charbon pulvérisé ou du char broyé provenant de la carbonisation à basse température, le diamètre des particules étant avantageusement inférieur à 100 microns.

6. Procédé selon l'une quelconque des revendications précédentes caractérisé en ce que la matière carbonée est alimentée par une tuyère, moyennant le $CO_2$, en tête du four.

7. Procédé selon l'une quelconque des revendications précédentes caractérisé en ce que le rapport pondéral matière carbonée/$CO_2$ est compris entre 0,5 et 1,1, et le rapport pondéral oxygène/$CO_2$ est compris entre 0,35 et 0,85.

8. Procédé selon l'une quelconque des revendications précédentes caractérisé en ce que le gaz produit est refroidi à la sortie du four, l'énergie calorifique ainsi récupérée étant utilisée pour le préchauffage du $CO_2$ et/ou de l'oxygène à l'entrée du four rotatif.

9. Procédé selon l'une quelconque des revendications précédentes caractérisé en ce qu'on introduit du calcaire en suspension dans du $CO_2$.

10. Installation pour la production en continu et à grande échelle de monoxyde de carbone comportant un four rotatif du type d'un four de cimenterie, équipé à l'entrée du four d'une série de tuyères pour l'injection du $CO_2$ avec en suspension la matière carbonée, et de l'oxygène, éventuellement unis sous légère dépression, et, en aval de celui-ci, un ou plusieurs échangeurs pour le refroidissement du monoxyde de carbone produit et, en amont, un ou plusieurs échangeurs pour le préchauffage des gaz admis, l'énergie calorifique récupérée en aval du four étant utilisée en amont du four.

$O_2$

FUMEES          CHARBON ———→ BROYEUR

ABSORPTION CO2 ———→ DESORPTION CO2 ———→ REACTEUR ———→ CO ———→ SYNTHESE

CALORIES

Figure unique.

## RAPPORT DE RECHERCHE EUROPEENNE

Office européen des brevets
Numero de la demande
EP 88 87 0119

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-C- 357 614 (RHENANIA VEREIN CHEMISCHER FABRIKEN AG et al.) * Revendications 1,3; page 2, lignes 52-65 * | 1 | C 01 B 31/18 |
| A | BE-A- 338 324 (H. NIELSEN) * Revendications 1,4; figure 2; page 4, alinéas 2,3 * | 1 | |
| A | US-A-1 865 053 (J.C. WOODRUFF) * Revendication 3; figures; page 1, ligne 97 - page 3, ligne 31 * | 1 | |
| A | US-A-1 929 069 (B.M.S. KALLING et al.) * Page 1, ligne 44 - page 2; figures * | 1 | |
| D,A | BE-A- 902 904 (P.G. GODRIE) * Page 2, alinéa 2; page 4, revendications 1,2 * | | |
| A | FR-A-2 075 023 (H. KOPPERS GmbH) | | DOMAINES TECHNIQUES RECHERCHES (Int. Cl.4)  C 01 B 31/00 |

Le présent rapport a été établi pour toutes les revendications

| Lieu de la recherche | Date d'achèvement de la recherche | Examinateur |
|---|---|---|
| LA HAYE | 29-11-1988 | BREBION J.CH. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)